# EUROPÄISCHE PATENTSCHRIFT

(11) **EP 0 716 255 B1**
(45) Veröffentlichungstag und Bekanntmachung des Hinweises auf die Patenterteilung: **26.07.2000**
(21) Anmeldenummer: 95119084.2
(22) Anmeldetag: 05.12.1995
(51) Int. Cl.: F16K 27/04, F16K 11/078, F16K 11/087, E03C 1/04, E03C 1/02

(54) **Sanitärarmatur**
Sanitary valve
Robinet sanitaire

(30) Priorität: 09.12.1994 DE 4443895
(43) Veröffentlichungstag der Anmeldung: 12.06.1996
(73) Patentinhaber: Hans Grohe GmbH & Co. KG, 77761 Schiltach (DE)
(72) Erfinder: Ginter Gerhard, 78144 Tennenbronn (DE)
(74) Vertreter: Patentanwälte Ruff, Beier, Schöndorf und Mütschele

(56) Entgegenhaltungen:
- DE-A- 3 119 313
- DE-A- 4 308 746
- DE-U- 8 505 620

## Beschreibung

Die Erfindung betrifft eine Sanitärarmatur gemäß den Merkmalen im Oberbegriff von Anspruch 1 wie sie aus DE-A-3 119 313 bekannt ist. Sanitärarmaturen enthalten im allgemeinen einen Armaturenkörper, der an einer Fläche befestigt wird, beispielsweise an der Oberseite eines Waschbeckens oder auch an einer Wand. In dem Armaturenkörper ist ein Aufnahmeraum gebildet, in den sich ein Ventilsystem einsetzen läßt. Bei dem Ventilsystem kann es sich um ein sogenanntes Ventiloberteil, einen Mischereinsatz, eine Ventilkartusche o. dgl. handeln.

Die Zuführung des zuzuführenden Leitungswassers geschieht in der Regel mit Hilfe von mit dem Armaturenkörper zu verbindenden Zuleitungsrohren, die beispielsweise unterhalb des Waschbeckens mit einem Wandanschluß verbunden werden. In ähnlicher Weise können auch von dem Mischsystem wegführende Leitungen angeschlossen werden.

Bei einem weiters bekannten Sanitärventil (DE 23 31 000 C2) kann das Zuleitungsrohr von oben durch eine entsprechende lange Bohrung des Armaturenkörpers eingesteckt werden. Es weist zu diesem Zweck an seinem Ende einen nach außen vorstehenden einstückigen Kragen auf, der auf einer entsprechenden Stufenfläche aufliegt. Da die Bohrung geradlinig ausgebildet ist, muß auch das Anschlußrohr geradlinig verlaufend ausgebildet sein. Eine solche Ausbildung ist dann schwierig zu verwirklichen, wenn das Rohr unterhalb des Grundkörpers einen von der geraden Linie abweichenden Verlauf einnehmen soll.

Für solche Fälle sind bereits Sanitärarmaturen vorgeschlagen worden, bei denen die Zuleitung mit Hilfe eines Schlauchs geschieht. Bei einer solchen bekannten Einhebelmischbatterie (DE 43 08 746 A1) enthält der Anschlußschlauch in seinem dem Ventil zugeordneten Endbereich einen Nippel, mit dem er von der dem Aufnahmeraum für das Ventilsystem abgewandten Seite in eine Öffnung eingeschraubt oder eingelötet werden kann. Damit ist zwar auch ein gebogener Verlauf der Anschlußleitung möglich, jedoch ist das Anbringen des Anschlußschlauchs immer noch erschwert.

Bei einer ähnlichen Lösung (DE 36 03 151 C1) wird der Schlauch ebenfalls von der Unterseite her angeschraubt.

Weiterhin ist eine Armatur bekannt (EP 470 052 A2), bei der der Anschlußschlauch geradlinig von der Unterseite her unter Zwischenlage einer Dichtung eingeschraubt wird.

Ebenfalls bekannt ist eine sanitäre Wasserarmatur (DE-A1-28 29 081), bei der der gesamte Armaturenkörper gegenüber einer Halterung zusammen mit dem Schwenkauslauf verschwenkt werden kann. Damit dies möglich ist, werden als Zuleitung flexible Schläuche verwendet. Diese werden jedoch von unten her mit dem schwenkbaren Armaturenkörper verbunden.

Der Erfindung liegt die Aufgabe zugrunde, eine Sanitärarmatur zu schaffen, bei der sich die Montage auch bei komplizierteren Verläufen der zu dem Ventilsystem führenden Leitungen leichter durchführen läßt.

Zur Lösung dieser Aufgabe schlägt die Erfindung eine Sanitärarmatur mit den im Anspruch 1 aufgeführten Merkmalen vor. Weiterbildungen der Erfindung sind Gegenstand der weiteren Patentansprüche.

Nach der Erfindung wird es nun zum erstenmal möglich, einen Anschlußschlauch von oben her, d. h. vom Aufnahmeraum für das Ventilsystem her, in den Armaturengrundkörper einzusetzen. Dies macht die Montage der Anschlußleitungen an dem Armaturengrundkörper vor der Anbringung des Armaturengrundkörpers an der Befestigungsfläche leichter möglich. Der Anschlußschlauch kann dabei auch durchgeschoben werden, wenn kompliziertere Verläufe des Anschlußschlauchs nötig werden. Der Gußkörper wird dadurch ebenfalls einfacher.

Erfindungsgemäß ist auch vorgesehen, daß der Nippel gegenüber dem Durchgang, in dem er angeordnet ist, frei verdrehbar angeordnet ist. Der Anschlußschlauch muß nach der Montage der Sanitärarmatur am Waschbecken an einem Eckventil mit einer Überwurfmutter festgeschraubt werden. Beim Festschrauben entsteht ein Drehmoment, das zur Torsion des Anschlußschlauchs führen kann. Bei den im Stand der Technik bekannten eingeschraubten Schläuchen besteht die Gefahr, daß diese Torsionskraft sich über den Schlauch fortsetzt und zum Lockern der Schraubverbindung am gegenüberliegenden Ende und damit zur Undichtigkeit führt. Bei den im Stand der Technik bekannten an der Armatur festgelöteten Anschlußschläuchen führt diese Torsion dazu, daß der Schlauch in einem verspannten Zustand montiert ist, so daß unter Umständen die Gefahr des Drehknickens entsteht. Durch die von der Erfindung vorgeschlagene Verdrehbarkeit des Nippels werden diese beiden Gefahren beseitigt.

Zur Sicherung des Anschlußschlauchs gegen Herausziehen kann vorgesehen sein, daß der Nippel eine zur Schlauchseite gerichtete Schulter aufweist, mit der er an einer Anlagefläche anliegt. Dies bildet eine formschlüssige Festlegung des Anschlußschlauchs.

Die Schulter kann insbesondere an einem verbreiterten Kopfteil des Nippels ausgebildet sein, wobei diese Begrenzungsfläche des verbreiterten Kopfteils im Übergang zu dem schmaleren Nippelteil gleichzeitig eine Begrenzungsfläche sein kann, die eine Begrenzung der Verbindung zwischen dem Schlauch und dem Nippel darstellt.

Erfindungsgemäß kann vorgesehen sein, daß der Durchgang in dem Armaturenkörper von einer Stufenbohrung gebildet ist, deren Teil mit größerem Durchgang in der Begrenzungsfläche mündet. Dieser Teil mit vergrößertem Durchgang kann zur Aufnahme von weiteren Funktionsteilen dienen. Insbesondere kann in Weiterbildung vorgesehen sein, daß der Nippel derart in den Durchgang einsetzbar ist, daß der verbreiterte Kopfteil in dem Teil der Stufenbohrung mit größerem Durchmesser liegt. Dabei kann der Kopfteil an seinem Außenumfang an der Wand der Stufenbohrung anliegen, was zur Zentrierung des schmaleren Teils des Nippels dienen kann, an dem der Schlauch festgelegt ist. Auf diese Weise kann auch erreicht werden, daß der Schlauch mit seinem Außenumfang nirgends an dem Durchgang anliegt.

Erfindungsgemäß kann vorgesehen sein, daß die Endfläche des eingesetzten Nippels bündig mit der Begrenzungsfläche des Armaturengrundkörpers verläuft.

Es kann erfindungsgemäß in Weiterbildung auch vorgesehen sein, daß der Nippel eine Stufenbohrung aufweist, deren Teil mit größerem Durchmesser in das Innere des Aufnahmeraums gerichtet ist.

Die Erfindung schlägt vor, daß das Ventilsystem einen mit einer Ausbildung des Aufnahmeraums zusammenwirkenden Ansatz aufweist. Dieser Ansatz kann zur Ausrichtung, zur Zentrierung oder zur Begrenzung einer Einsetzbewegung dienen. Insbesondere kann vorgesehen sein, daß der Ansatz hohl ist und zu der Wasserdurchtrittsöffnung des Ventilsystems führt.

Erfindungsgemäß kann in Weiterbildung vorgesehen sein, daß der Ansatz zum Eingriff in die Innenbohrung des Nippels ausgebildet ist. Diesen Fall kann also eine direkte Verbindung zwischen dem wasserführenden Schlauch und dem Ventilsystem hergestellt werden.

Erfindungsgemäß kann vorgesehen sein, daß bei Vorhandensein eines einzelnen Anschlußschlauchs der Durchgang für den Nippel nicht im Mittelpunkt der Begrenzungsfläche angeordnet ist. Daher kann der Nippel für den Leitungsschlauch gleichzeitig auch noch die Funktion der korrekten Ausrichtung des Ventilsystems übernehmen.

Bei Vorhandensein zweier Anschlußschläuche, was bei einem Mischventilsystem der Normalfall ist, kann erfindungsgemäß vorgesehen sein, daß die dann erforderlichen beiden Durchgänge nicht auf einem Durchmesser der Begrenzungsfläche liegen.

Zur Abdichtung der Wasserführung gibt es verschiedene Möglichkeiten. Eine von der Erfindung vorgeschlagene Möglichkeit besteht darin, den Nippel gegenüber dem Durchgang abzudichten.

Eine weitere Möglichkeit besteht darin, den Ansatz des Ventilsystems gegenüber dem Durchgang abzudichten.

Eine dritte Möglichkeit besteht darin, den Ansatz des Ventilsystems gegenüber dem Nippel abzudichten.

Die Erfindung schlägt vor, daß der Aufnahmeraum zylindrisch ausgebildet ist und von dem Ventilsystem vorzugsweise im wesentlichen vollständig ausgefüllt wird.

Erfindungsgemäß kann vorgesehen sein, daß das Ventilsystem flächig an der Begrenzungsfläche anliegt.

Nach einem weiteren Merkmal der Erfindung kann vorgesehen sein, daß die Wasserdurchtrittsöffnung des Ventilsystems eine Einlaßöffnung oder eine Auslaßöffnung einer feststehenden Steuerscheibe eines Scheibenmischsystems ist.

Zur Anbringung des Schlauchs an dem Nippel kann vorgesehen sein, daß der Schlauch an dem Nippel angeschraubt oder durch eine Überwurfmutter festgelegt ist. Besonders günstig ist es jedoch, wenn der Schlauch auf einen entsprechend geformten Teil des Nippels aufgeschoben wird.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig.1: einen schematischen Teillängsschnitt durch ein sanitäres Mischventil mit einem Kugelmischsystem;
- Fig. 2: einen der Fig. 1 entsprechenden Schnitt durch eine Sanitärarmatur nach einem zweiten Ausführungsbeispiel;
- Fig. 3: einen Schnitt durch eine Sanitärarmatur mit einem Scheibenmischsystem.

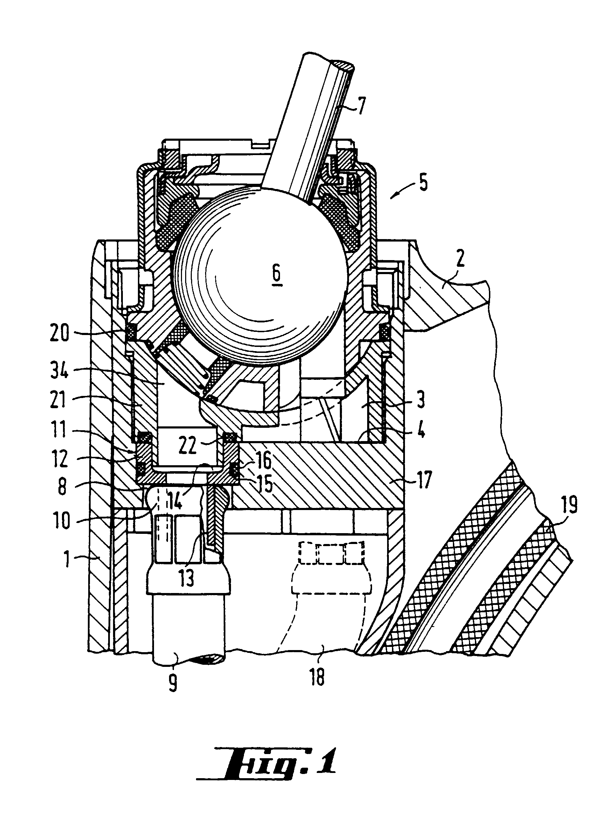

Die in Fig. 1 dargestellte Sanitärarmatur enthält einen Armaturengrundkörper 1, der an seiner in Fig. 1 rechten Seite eine nur abgebrochen dargestellte Auslaufschnauze 2 aufweist. In dem Armaturengrundkörper ist ein Aufnahmeraum 3 in etwa kreiszylindrischer Form ausgebildet, der durch eine im dargestellten Beispiel ebene Begrenzungsfläche 4 begrenzt wird. In den Aufnahmeraum 3 ist ein Ventilsystem 5 eingesetzt, das im dargestellten Beispiel als Kugelmischsystem ausgebildet ist. Zur Verstellung des Mischsystems ist an der im Innern angeordneten Kugel 6 ein Schaft 7 befestigt, der außerhalb des Armaturengrundkörpers mit einem nicht dargestellten Betätigungsgriff verbunden wird.

In dem Armaturengrundkörper ist ein Durchgang 8 ausgebildet, der von einer Stufenbohrung gebildet wird. Der Teil dieser Stufenbohrung mit größerem Durchmesser mündet in der Begrenzungsfläche 4 des Aufnahmeraums 3.

In den Aufnahmeraum 3 führt ein Anschlußschlauch 9, beispielsweise für warmes Wasser. Der Anschlußschlauch 9 ist mit seinem dem Ventilsystem 5 zugeordneten Ende 10 auf einen Nippel 11 aufgeschoben. Der Nippel 11 weist einen verbreiterten Kopfteil 12 und einen sich daran einstückig anschließenden rechts im Schnitt dargestellten Rohransatz 13 auf. Der Rohransatz 13 ist, ebenso wie der Kopfteil 12, kreiszylindrisch ausgebildet. Der Nippel 12 weist eine Innenbohrung 14 auf, die ebenfalls die Form einer Stufenbohrung aufweist.

In den Außenumfang des Kopfteils 12 des Nippels 11 ist eine umlaufende Nut 15 eingebracht, in der ein O-Ring 16 liegt. Dieser O-Ring dient zur Abdichtung des Nippels gegenüber dem Durchgang 8. Im übrigen ist der Außendurchmesser des Kopfteils 12 des Nippels 11 dem Innendurchmesser des vergrößerten Teils des Durchgangs 8 gleich.

Der Teil des Durchgangs 8 mit kleinerem Durchmesser ist so bemessen, daß der Schlauch 9 in seinem Endbereich 10, der auf den Rohrsatz 13 des Nippels 11 aufgeschoben ist, von der Wand des Durchgangs 8 überall einen Abstand aufweist.

Durch die Querwand 17 des Armaturengrundkörpers verläuft ein weiterer nicht dargestellter Durchgang zum Anschluß eines Kaltwasserschlauchs sowie ein Durchgang zum Anschluß eines aus dem Aufnahmeraum 3 herausführenden Anschlußschlauchs 18, der beispielsweise zu einer Handbrause oder zu dem in dem Armaturengrundkörper angeordneten Schlauch 19 führt, der die Wasserführung zu dem Auslauf aus der Auslaufschnauze 2 bildet.

Das Ventilsystem 5 ist so in den Aufnahmeraum 3 eingesetzt, daß es diesen im wesentlichen vollständig ausfüllt. Zur Abdichtung dient ein O-Ring 20. Das Ventilsystem 5 enthält an seiner der Begrenzungswand 4 zugeordneten Seite einen Ansatz 21, der mit seinem vorderen Ende in die Innenbohrung 14 des Kopfteils 12 des Nippels 11 eingreift. Zur Abdichtung zwischen dem Nippel 11 und dem Ansatz 21 ist ein weiterer O-Ring 22 vorgesehen. Dieser liegt auf der freien Stirnfläche des Nippels 11 auf, der seinerseits bündig mit der Begrenzungsfläche 4 des Aufnahmeraums 3 angeordnet ist.

Das Zusammensetzen der dargestellten Anordnung geschieht so, daß zunächst der Schlauch 9 auf den rohrartigen Ansatz 13 des Nippels 11 aufgeschoben und mit diesem verbunden wird. Die Aufschiebebewegung wird dabei durch das Anliegen des Endes des Schlauchs 9 an der Schulter des Kopfteils 12 begrenzt. Anschließend wird der Schlauch mit dem befestigten Nippel von oben her, d. h. vom Aufnahmeraum 3 her, durch den Durchgang 8 hindurchgeschoben, wobei sich das gegenüberliegende Ende des Schlauchs frei durch das Innere der Armatur hindurchschieben läßt. Dann wird der Kopfteil 12 des Nippels 11 in die Stufenbohrung des Durchgangs 8 eingesetzt. Anschließend wird das Ventilsystem 5 in den Aufnahmeraum 3 eingesetzt und mit einer nicht dargestellten Überwurfmutter von oben her befestigt.

Danach kann die Armatur an dem Waschbecken angebracht werden, wobei die Schläuche durch die Öffnung des Waschbeckens hindurchgesteckt werden. Wird das freie Ende des Anschlußschlauchs 9 an dem Eckventil angeschraubt, so können dabei auftretende Verdrehungen des Anschlußschlauchs dadurch aufgenommen werden, daß der Nippel 11 verdreht werden kann.

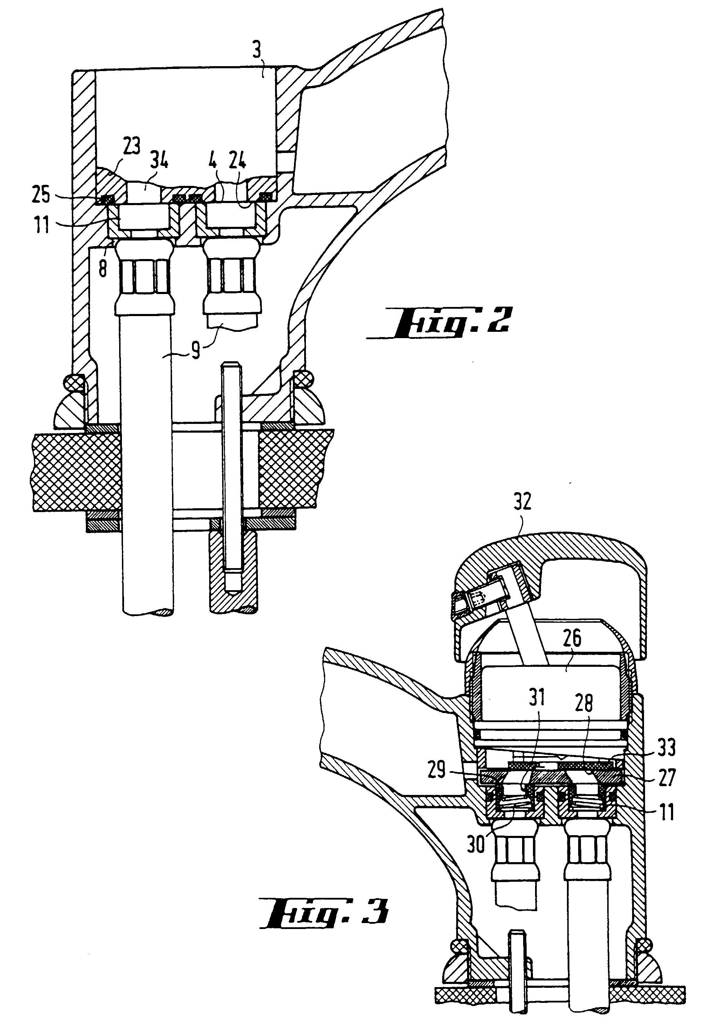

Fig. 2 zeigt eine weitere Ausführungsform, bei der ein anderes Ventilsystem verwendet wird. Das nur teilweise dargestellte Ventilsystem wird von einer Kartusche 23 gebildet, die den Aufnahmeraum 3 vollständig ausfüllt. Die Kartusche 23 liegt mit ihrer ebenen Stirnfläche 24 flächig auf der Begrenzungsfläche 4 auf. In der Begrenzungsfläche sind 2 stufenförmige Durchgänge 8, in denen jeweils ein mit einem Anschlußschlauch 9 versehener Nippel 11 bündig liegt. Während bei der Ausführungsform der Fig. 1 die Abdichtung des Nippels gegenüber dem Durchgang durch einen in der Mantelfläche liegenden O-Ring 16 geschah, dient bei der Ausführungsform der Fig. 2 eine Flachdichtung 25 zur Abdichtung des Nippels 11 und der Kartusche 23 gegenüber dem Gehäuse. Wiederum liegt der Nippel 11 so, daß seine freie Endfläche bündig mit der Begrenzungswand 4 verläuft.

Fig. 3 zeigt eine nochmals weitere Ausführungsform, wobei als Ventilsystem eine Kartusche 26 eines Scheibenmischsystems dient. Diese Kartusche 26 wird auf ihrer der Begrenzungswand zugeordneten Seite von einer ebenen feststehenden Steuerscheibe 27 des Scheibenmischsystems begrenzt. Diese feststehende Steuerscheibe 27 enthält zwei schräg verlaufende Durchgänge 28, die als Einlaßöffnungen in das Mischsystem dienen.

In den Nippeln 11, die ebenfalls bündig in die Durchgänge 8 eingesetzt sind, sind in dem vergrößerten Teil der Stufenbohrung 14 Dichteinsätze 29 angeordnet. Jeder Dichteinsatz 29 enthält eine Schraubendruckfeder 30 und eine Manschette 31 aus gummielastischem Material, die von der Druckfeder 30 gegen die Unterseite der feststehenden Ventilscheibe 27 gedrückt wird. In der Kartusche selbst ist eine durch das Betätigungselement 32 bewegbare Steuerscheibe 33 angeordnet, die auf der feststehenden Steuerscheibe 27 liegt und durch Verschieben die Durchgänge 28 mehr oder weniger weit öffnet bzw. schließt.

Auch bei den Ausführungsformen der Fig. 2 und 3 geschieht das Zusammensetzen der Armatur in der gleichen unter Bezugnahme auf Fig. 1 beschriebenen Art und Weise.

Auch hier ist wieder der Vorteil gegeben, daß beim Festschrauben der Schläuche an den Eckventilen sich der Nippel 11 verdrehen kann, um die Torsionsspannungen auszugleichen.

## Patentansprüche

1. Sanitärarmatur, mit
1.1 einem Armaturenkörper (1),
1.2 einem in diesem ausgebildeten zur Aufnahme eines Ventilsystems (5) bestimmten Aufnahmeraum (3), der
1.2.1 eine Begrenzungsfläche (4) und
1.2.2 mindestens einen in dieser ausmündenden Durchgang (8) aufweist,
1.3 einem in den Aufnahmeraum (3) einsetzbaren Ventilsystem (5), insbesondere einer Mischerkartusche (23, 26), das
1.3.1 mindestens eine dem Durchgang zugeordnete Wasserdurchtrittsöffnung (34, 28) aufweist, gekennzeichnet durch
1.4 einen Anschlußschlauch (9, 18), dessen
1.4.1 dem Armaturenkörper (1) zugeordnetes Ende (10) mit einem Nippel (11) versehen ist, der
1.4.2 in den Durchgang (8) von der Seite des Aufnahmeraums (3) her einsetzbar,
1.4.3 gegen Herausziehen durch den Durchgang (8) hindurch gesichert und
1.4.4 gegenüber dem Durchgang (8) frei verdrehbar angeordnet ist.

2. Sanitärarmatur nach Anspruch 1, bei der der Nippel (11) eine zur Schlauchseite gerichtete, vorzugsweise an einem verbreiterten Kopfteil (12) des Nippels (11) ausgebildete Schulter aufweist, mit der er an einer Anlagefläche anliegt.

3. Sanitärarmatur nach einem der vorhergehenden Ansprüche, bei der der Durchgang (8) von einer Stufenbohrung gebildet ist, deren Teil mit größerem Durchmesser in der Begrenzungsfläche (4) mündet.

4. Sanitärarmatur nach einem der vorhergehenden Ansprüche, bei der der eingesetzte Nippel (11) mit seiner Endfläche bündig mit der Begrenzungsfläche (4) angeordnet ist.

5. Sanitärarmatur nach einem der vorhergehenden Ansprüche, bei der der Nippel (11) eine Stufenbohrung (14) aufweist, deren Teil mit größerem Durchmesser zum Aufnahmeraum (3) gerichtet ist.

6. Sanitärarmatur nach einem der vorhergehenden Ansprüche, bei der das Ventilsystem (5) einen mit einer Ausbildung des Aufnahmeraums (3) zusammenwirkenden Ansatz (21) aufweist, der insbesondere hohl ist und zu der Wasserdurchtrittsöffnung (34, 28) führt und ggf. zum Eingriff in die Innenbohrung (14) des Nippels (11) ausgebildet ist.

7. Sanitärarmatur nach einem der vorhergehenden Ansprüche, bei der bei Vorhandensein eines einzelnen Anschlußschlauchs (9, 18) der Durchgang (8) für den Nippel (11) außerhalb des Mittelpunkts der Begrenzungsfläche (4) angeordnet ist und bei der bei Vorhandensein zweier Anschlußschläuche (9, 18) die beiden Durchgänge (8) für die Nippel (11) nicht symmetrisch auf einem Durchmesser der Begrenzungsfläche (4) liegen.

8. Sanitärarmatur nach einem der vorhergehenden Ansprüche, bei der der Nippel (11) gegenüber dem Durchgang (8) abgedichtet ist.

9. Sanitärarmatur nach einem der Ansprüche 6 oder 7, bei der der Ansatz (21) des Ventilsystems (5) gegenüber dem Durchgang (8) für den Nippel (11) und/oder gegenüber dem Nippel (11) abgedichtet ist.

10. Sanitärarmatur nach einem der vorhergehenden Ansprüche, bei der der Aufnahmeraum (3) zylindrisch ausgebildet ist und das Ventilsystem (5) ihn im wesentlichen vollständig ausfüllt.

11. Sanitärarmatur nach einem der vorhergehenden Ansprüche, bei der das Ventilsystem (5) flächig an der Begrenzungsfläche (4) anliegt.

12. Sanitärarmatur nach einem der vorhergehenden Ansprüche, bei der die Wasserdurchtrittsöffnung (34) des Ventilsystems (5) eine Einlaßöffnung oder eine Auslaßöffnung einer feststehenden Steuerfläche eines Kugelmischsystems ist oder einer feststehenden Steuerscheibe (27) eines Scheibenmischsystems ist.

13. Sanitärarmatur nach einem der vorhergehenden Ansprüche, bei der der Schlauch (9, 18) auf den Nippel (11) aufgeschoben ist, insbesondere auf einen Rohransatz (13) des Nippels (11).

## Claims

1. Sanitary fitting having
1.1 a fitting body (1),
1.2 a reception space (3) constructed therein and intended for the reception of a valve system (5) and which has
1.2.1 a boundary surface (4) and
1.2.2 at least one passage (8) issuing into the latter,
1.3 a valve system (5) insertable into the reception space (3) and in particular a mixer cartridge (23, 26), which
1.3.1 has at least one water passage opening (34, 28) associated with said passage, characterized by
1.4 a connecting hose (9, 18), whose
1.4.1 end (10) associated with the fitting body (1) is provided with a nipple (11), which
1.4.2 is insertable into the passage (8) from the side of the reception space (3),
1.4.3 is secured against extraction through the passage (8), and
1.4.4 is freely rotatable with respect to the passage (8).

2. Sanitary fitting according to claim 1, wherein the nipple (11) has a shoulder directed towards the hose side and preferably constructed on a widened head part (12) of the nipple (11) and with which it engages on a contact surface.

3. Sanitary fitting according to one of the preceding claims, wherein the passage (8) is formed by a step bore, whose larger diameter part issues into the boundary surface (4).

4. Sanitary fitting according to one of the preceding claims, wherein the end face of the inserted nipple (11) is flush with the boundary surface (4).

5. Sanitary fitting according to one of the preceding claims, wherein the nipple (11) has a step bore (14), whose larger diameter part is directed towards the reception space (3).

6. Sanitary fitting according to one of the preceding claims, wherein the valve system (5) has a lug (21) cooperating with a formation of the reception space (3) and which is in particular hollow and leads to the water passage opening (34, 28) and which is optionally constructed for engaging in the inner bore (14) of the nipple (11).

7. Sanitary fitting according to one of the preceding claims, wherein in the presence of a single connecting hose (9, 18) the passage (8) for the nipple (11) is located outside the centre of the boundary surface (4) and when there are two connecting hoses (9, 18) the two passages (8) for the nipples (11) are not positioned symmetrically on a diameter of the boundary surface (4).

8. Sanitary fitting according to one of the preceding claims, wherein the nipple (11) is sealed with respect to the passage (8).

9. Sanitary fitting according to one of the claims 6 or 7, wherein the lug (21) of the valve system (5) is sealed relative to the passage (8) for the nipple (11) and/or relative to the nipple (11).

10. Sanitary fitting according to one of the preceding claims, wherein the reception space (3) has a cylindrical construction and the valve system (5) substantially completely fills it.

11. Sanitary fitting according to one of the preceding claims, wherein the valve system (5) engages flat on the boundary surface (4).

12. Sanitary fitting according to one of the preceding claims, wherein the water passage opening (34) of the valve system (5) is an inlet port or an outlet port of a fixed control face of a ball mixing system or a fixed control disk (27) of a disk mixing system.

13. Sanitary fitting according to one of the preceding claims, wherein the hose (9, 18) is mounted on the nipple (11), particularly on a pipe socket (13) of said nipple (11).

## Revendications

1. Robinetterie de sanitaire comprenant
1.1 un corps de robinetterie (1)
1.2 un espace de logement (3) destiné au logement d'un système de soupape (5) ménagé dans ce dernier, espace de logement qui
1.2.1 présente une surface de délimitation (4) et
1.2.2 au moins un passage (8) débouchant dans cette dernière,
1.3 un système de soupape (5) insérable dans l'espace de logement (3), en particulier une cartouche mélangeur (23, 26), système qui
1.3.1 présente au moins une ouverture d'admission d'eau (34, 28) associée au passage, characterisée par
1.4 un tuyau flexible de raccordement (9, 18) dont
1.4.1 l'extrémité (10) associée au corps de robinetterie (1) est munie d'une nipple (11) qui
1.4.2 peut être insérée dans le passage (8) depuis le côté de l'espace de logement (3),
1.4.3 qui est bloquée pour ne pas être extraite par le passage (8), et
1.4.4 qui est disposée de manière librement rotative par rapport au passage (8).

2. Robinetterie de sanitaire selon la revendication 1, où la nipple (11) présente un épaulement dirigé vers le côté du flexible, de préférence ménagé sur une partie de tête élargie (12) de la nipple (11), la nipple s'appliquant par l'épaulement contre une surface d'application.

3. Robinetterie de sanitaire selon l'une des revendications précédentes où le passage (8) est formé par un alésage étagé dont la partie ayant le plus grand diamètre débouche dans la surface de délimitation (4).

4. Robinetterie de sanitaire selon l'une des revendications précédentes où la surface d'extrémité de nipple insérée (11) est disposée à fleur avec la surface de délimitation (4).

5. Robinetterie de sanitaire selon l'une des revendications précédentes où la nipple (11) présente un alésage étagé (14) dont la partie avec le plus grand diamètre est dirigée vers l'espace de logement (3).

6. Robinetterie de sanitaire selon l'une des revendications précédentes où le système de soupape (5) présente une saillie (21) qui coopère avec l'espace de logement (3) en particulier de forme creuse, qui mène à l'ouverture de passage de l'eau (34, 28) et qui est prévue le cas échéant pour une intervention dans l'alésage interne (14) de la nipple (11).

7. Robinetterie de sanitaire selon l'une des revendications précédentes où, en présence d'un seul tuyau flexible, de raccordement (9, 18), le passage (8) pour la nipple (11) est disposé à l'extérieur du point central de la surface de délimitation (4) et où, en présence de deux tuyaux flexibles de raccordement (9, 18), les deux passages (8) pour la nipple (11) ne sont pas situés de manière symétrique sur un diamètre de la surface de délimitation.

8. Robinetterie de sanitaire selon l'une des revendications précédentes où la nipple (11) est rendue étanche en particulier par rapport au passage (8).

9. Robinetterie de sanitaire selon l'une des revendications 6 ou 7 où la saillie (21) du système de soupape (5) est rendue étanche en particulier par rapport au passage (8) pour la nipple (11) et/ou par rapport à la nipple (11).

10. Robinetterie de sanitaire selon l'une des revendications précédentes où l'espace de logement (3) est de forme cylindrique et où le système de soupape (5) le remplit sensiblement entièrement.

11. Robinetterie de sanitaire selon l'une des revendications précédentes où le système de soupape (5) s'applique surface contre surface contre la surface de délimitation (4).

12. Robinetterie de sanitaire selon l'une des revendications précédentes où l'ouverture d'admission de l'eau (34) du système de soupape (5) est une ouverture d'admission ou de sortie d'une surface de commande fixe d'un système de mélange à boisseau sphérique ou d'un disque de commande fixe (27) d'un système de mélange à disque.

13. Robinetterie de sanitaire selon l'une des revendications précédentes où le tuyau (9, 18) est enfilé sur la nipple (11), en particulier sur un appendice tubulaire (13) de la nipple (11).
